# EUROPEAN PATENT SPECIFICATION

(11) **EP 2 820 366 B1**
(45) Date of publication and mention of the grant of the patent: **14.09.2016**
(21) Application number: 13704250.3
(22) Date of filing: 21.01.2013
(51) Int. Cl.: F28D 7/16, C09C 1/50

(54) **HEAT EXCHANGER ADAPTED FOR THE PRODUCTION OF CARBON BLACK**
FÜR DIE HERSTELLUNG VON RUSS KONFIGURIERTER WÄRMETAUSCHER
ÉCHANGEUR DE CHALEUR ADAPTÉ POUR LA PRODUCTION DE NOIR DE CARBONE

(30) Priority: 13.02.2012 SE 1250107
(43) Date of publication of application: 07.01.2015
(73) Proprietor: Prometheus Technologies GmbH, 40667 Meerbusch (DE); Aktiebolaget K.A. Ekströms & Son, 291 25 Kristianstad (SE)
(72) Inventor: EHMANN, Ingo, 63456 Hanau (DE); KÄRRBERG, Lennart, S-291 44 Kristianstad (SE)
(74) Representative: Groth & Co. KB
(86) International application number: PCT/SE2013/050038
(87) International publication number: WO 2013/122528

(56) References cited:
- EP-A2- 0 417 428
- FR-A- 892 762

## Description

The present invention relates in general to a heat exchanger for preheating combustion gas in the production of carbon black. The present invention also relates to a carbon black production plant comprising a combustion chamber and a heat exchanger. EP-A2-0417428 discloses a heat exchanger as defined in the preamble of claim 1.

### Background

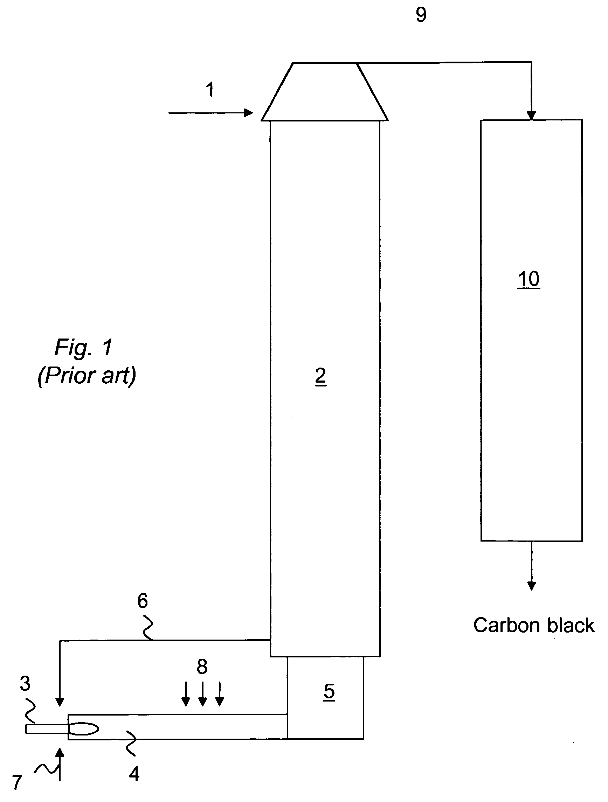

Carbon black is generally produced in a furnace type reactor by paralyzing a hydrocarbon feedstock with hot combustion gases, often air, to produce combustion products containing particulate carbon black. A schematic illustration of an example of a conventional plant for the production of carbon black is shown in Figure 1. Combustion gas is lead via a conduit 1 into the upper part of a tube heat exchanger 2, also known as an air pre-heater, in which it is preheated before the following combustion of oil, in the burner 3 and the combustion chamber 4. The preheated gas from the heat exchanger is lead into the combustion chamber via a conduit 6. Oil is added to the reactor via a conduit 7. In some cases, quench water 8 is added downstream the combustion chamber. The mixture of suspended carbon black in the consumed combustion gas is lead into an evaporation chamber 5 and thereafter passed through the heat exchanger and led away from the top of the heat exchanger via a conduit 9 to a filter arrangement 10, possibly via an oil preheater and/or an additional heat exchanger (not shown). In this filter arrangement 10 the carbon black is completely filtered off from the gas flow.

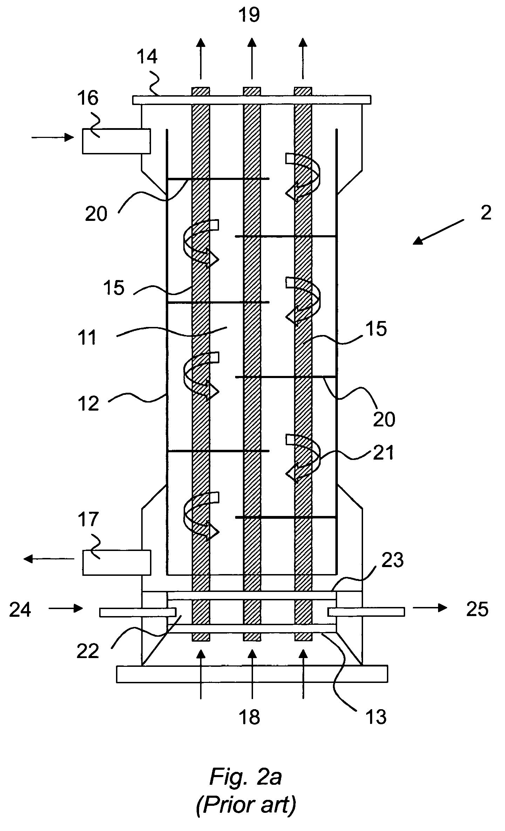

Figure 2a shows a simplified example of a conventional tube heat exchanger 2 used in a plant as shown in Figure 1. The heat exchanger 2 comprises a substantially cylindrical chamber 11 arranged vertically relative to a ground surface. The chamber 11 is enclosed by a substantially cylindrically shaped jacket 12 or shell, a lower end wall 23 and an upper end wall 14. The lower end wall 23 is also known as a tube plate. Tubes 15 are arranged vertically inside the chamber. The tubes 15 are arranged substantially parallel to each other and extend through the entire chamber from the bottom end wall 23 to the upper end wall 14. Combustion gas which is to be preheated is introduced via inlet 16 into the heat exchanger and exits via outlet 17 from which it is led to the combustion chamber.

The combusted oil, which is now a mixture of suspended carbon black in the consumed combustion gas, is led from the bottom of the chamber (illustrated by arrows 18) inside the tubes 15 to the top of the chamber and thereafter led via an exit (illustrated by arrows 19) to the filter arrangement.

The heat exchanger may also have horizontally arranged plates 20 extending from the jacket 12 into the chamber 11. Such plates 20 force the gas flowing through the chamber to take a longer part (illustrated by arrows 21) thereby increasing the time inside the chamber and thus the temperature of the exiting preheated gas.

Most heat exchangers used today preheat the combustion gas to approximately 800 °C. The high temperature of the flue gas causes high temperature loads on the tubes and on the shell of the heat exchanger, which in turn lead to substantial thermal expansion during use. The thermal expansion causes great thermal stresses on the tubes and the shell due to limited opportunities to expansion. Various solutions have been used to overcome this problem, such as for example a double shell type heat exchanger wherein the heat exchanger has a first inner shell and a second outer shell and the combustion gas is introduced into the heat exchanger at its lower end between the outer and inner shell and lead between the shells up to the top of the heat exchanger and thereafter brought into contact with the tubes of the heat exchanger. Thereby, the temperature of the outer shell is reduced. Such a double shell type heat exchanger is disclosed EP 0 865 600 B1.

Moreover, various solutions for allowing the tubes to expand have been proposed. One example of such a solution is shown in US 6 334 482 wherein the tube plate is equipped with compensating devices to enable expansion of the tubes.

Furthermore, cooling of the bottom plate has been proposed. This is also shown in Figure 2a, wherein the bottom end wall 23 defines an enclosed space 22 together with a lower bottom plate 13. Cooling gas is introduced, as shown by arrow 24, into the space 22 and exits the space 22 through an outlet, as shown by arrow 25. Another example of cooling of the bottom plate is disclosed in US 6 334 483 wherein the plate includes upper and lower spar plates forming a spar space through which the tubes extend. The spar space is provided with internal channels adapted for a cooling medium.

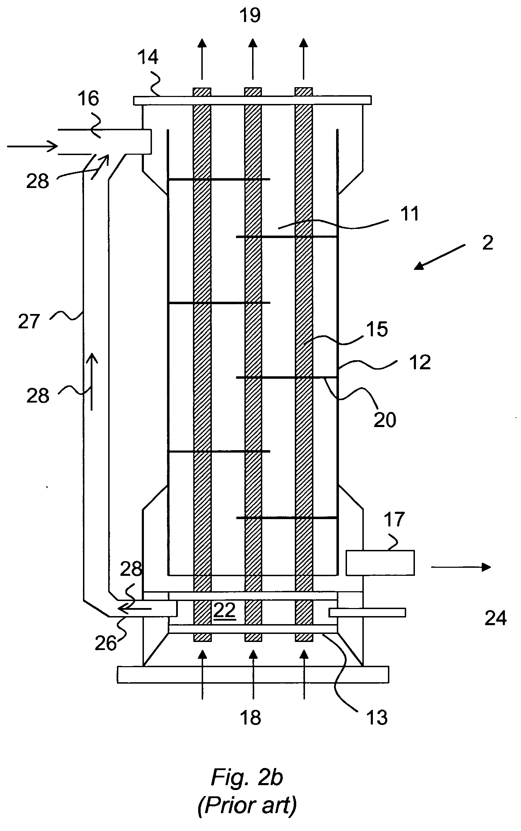

Figure 2b illustrates a simplified alternative example of a conventional tube heat exchanger, which differs from the tube heat exchanger shown in Figure 2a in that the cooling gas introduced into the space 22 is after its exit from the space 22 recycled to be used as combustion gas to be preheated. The cooling gas exiting the space 22 through a cooling gas outlet 26 is thereafter led via conduit 27 from the space 22 to the inlet 16 for combustion gas to be preheated, as illustrated by arrows 28. Thus, the gas to be preheated constitutes both recycled cooling gas and new fresh gas. This allows for a more efficient heat exchange of the heat exchanger.

Conventional heat exchangers for the production of carbon black may sometimes suffer from agglomeration and clogging of carbon black inside the tubes resulting in fouling. Such fouling influences for example the heat transfer resulting in a lower temperature of the pre-heated gas leaving the heat exchanger, which in turn leads to a lower yield of the carbon black production plant. Furthermore, the flow of the combusted gas through the pipes from the bottom of the heat exchanger to the top thereof may be influenced and the tubes may be damaged. Ultimately, the heat exchanger has to be shut down for maintenance and cleaning. Such a stop in the production of carbon black is very time-consuming and costly, especially since cleaning of the tubes is very difficult. Thus, there is a need to minimize the risk of clogging and fouling of carbon black inside the tubes.

It is previously known that the fouling results from the temperature difference between the combusted gas comprising the suspended carbon black and the surface of the tubes. US 2004/0081609 proposes to solve the problem by making sure that the temperature difference is less than 500°F, i.e. 260°C, which is controlled by the velocity of the stream of gas to be pre-heated. The heat exchanger comprises an outer and an inner shell with a space interposed between the shells for distributing the gas to be preheated. Holes are made in the inner shell at various vertical locations to feed the gas stream into the interior regions of the heat exchanger and contact the tubes in which the carbon black containing stream flows. The proposed solution in US 2004/0081609 is however not practical for the reason that it would be very difficult to calculate how the holes should be arranged in order to achieve the desired result.

Moreover, the double shell heat exchanger disclosed in EP 0 865 600 B1, discussed above, has reduced fouling due to reduced temperature difference between the tubes and the combusted gas flowing therein.

Another way of dealing with the problem of fouling is proposed in CN 101625128 B wherein a pulse flushing device is used to clean the heat exchanger from fouling. The pulse flushing device is installed upstream of the tubes of the heat exchanger.

However, there is still a need for a more practical solution to the problem of fouling and preferably to be able to avoid fouling such that complicated cleaning processes can be avoided.

### Summary

The object of the present invention is to provide a heat exchanger, adapted for the production of carbon black, with reduced risk of fouling of the tubes by carbon black.

The object is achieved by means of the heat exchanger adapted for the production of carbon black as defined by claim 1. Embodiments of the invention are defined by the dependent claims.

The heat exchanger in accordance with the present invention reduces the temperature difference between the combusted gas flowing inside the tubes and the temperature of the surface of the tubes, thereby significantly reducing or even eliminating the fouling of the tubes. Furthermore, it efficiently utilizes the heat from the combusted gas comprising suspended carbon black which enables an energy and cost efficient process for producing carbon black.

The heat exchanger in accordance with the present invention comprises a first heat exchanging part comprising a substantially vertically arranged substantially cylindrical first chamber enclosed by a substantially cylindrically shaped jacket, a lower end wall and an upper end wall. The first heat exchanging part further comprises vertically arranged tubes adapted for flow of combusted gas therein and which extend through the entire first chamber from the lower end wall to the upper end wall, a first inlet and a first outlet for gas to be preheated to flow inside the first chamber on the outside of the tubes. The heat exchanger further comprises a second heat exchanging part comprising a substantially vertically arranged second chamber adapted for flow of combusted gas therein, the second chamber being surrounded by a substantially cylindrically shaped first shell adapted for allowing heat transfer to a gas to be preheated flowing on the outside of said first shell. Moreover, the heat exchanger comprises a conduit adapted for flow of gas to be preheated from the second heat exchanging part to the first heat exchanging part.

In accordance with an embodiment, the second heat exchanging part is arranged upstream of the first heat exchanging part relating to the flow of combusted gas. This ensures that an optimum heat exchange to the gas to be preheated is achieved before it enters the first chamber.

Preferably, the second heat exchanging part has a vertical central axis which coincides with a vertical central axis of the first heat exchanging part.

According to a preferred embodiment, the second heat exchanging part further comprises a substantially cylindrically shaped second shell arranged radially outside of said first shell and substantially concentrically with the first shell so that a substantially cylindrically shaped gap, adapted for flow of gas to be preheated, is formed between the first and the second shell. The gap may preferably be open at both vertical ends thereof for allowing gas to flow into and out of the gap.

According to yet an embodiment, the second heat exchanging part further comprises a substantially cylindrically shaped ring chamber arranged at one of the vertical ends of the gap and adapted for distributing the gas to be preheated into the gap around the circumference of the first shell member, and a second inlet for introducing gas to be preheated into said gap via said ring chamber. The ring chamber according to this embodiment is preferably a substantially cylindrically shaped inlet space.

According to yet an embodiment, the second heat exchanging part further comprises a substantially cylindrically shaped ring chamber arranged at the other vertical end of the gap and adapted for collecting the gas to be preheated from the gap, and a second outlet for removing gas to be preheated from said gap via said ring chamber to said conduit. The ring chamber according to this embodiment is preferably a substantially cylindrically shaped outlet space.

The diameter of the second chamber should preferably be relatively large in order to achieve a large heat transferring surface. Thus, according to one embodiment, the tubes are arranged in a bundle having a diameter which is smaller than a largest diameter of the second chamber of the second heat exchanging part.

According to yet an embodiment, the conduit is adapted for flow of gas from the second heat exchanging part to the chamber of the first heat exchanging part via said first inlet.

According to yet another embodiment, second heat exchanging part is rigidly mounted so as to avoid thermal expansion thereof in the vertical direction. Moreover, the second heat exchanging part may comprise internal expansion means for allowing different parts thereof to expand thermally, at least in the vertical direction.

According to yet another embodiment, the heat exchanger comprises means for cooling said lower end wall by a cooling gas, said cooling gas being introduced into a bottom space of the first heat exchanging part, said bottom space defined by said lower end wall and a lower bottom plate. The heat exchanger may further comprise means for flow of said cooling gas from said bottom space to said conduit and/or first inlet for gas to be preheated in the first chamber.

In accordance with one embodiment, the second heat exchanging part is designed so that a flow of gas to be preheated, on the outside of said first shell, is in a counter-flow of the flow of combusted gas flowing inside the chamber of the second heat exchanging part. Alternatively, the second heat exchanging part is designed so that a flow of gas to be preheated, on the outside of said first shell, is parallel to the flow of combusted gas flowing inside the chamber of the second heat exchanging part.

The invention further relates to a plant comprising a heat exchanger as described above.

### Brief description of the drawings

- Figure 1: shows schematically a conventional plant for the production of carbon black.
- Figure 2a: illustrates a simplified cross sectional view of a tube heat exchanger in accordance with prior art.
- Figure 2b: illustrates a simplified cross sectional view of an alternative tube heat exchanger in accordance with prior art.
- Figure 3: illustrates a simplified cross sectional view of a heat exchanger according to one embodiment of the invention.
- Figure 4: illustrates a simplified cross sectional view of a heat exchanger according to another embodiment of the invention.
- Figure 5: illustrates a simplified cross sectional view of a second heat exchanging part of a heat exchanger in accordance with an embodiment of the invention.
- Figure 6: illustrates a cross sectional view of a second heat exchanging part of a heat exchanger in accordance with another embodiment of the invention.

### Detailed description

The invention will now be described with reference to the accompanying drawings. The drawings have in some cases been simplified and some features are exaggerated in order to more clearly illustrate the invention. Hence, the figures shall not be considered drawn to scale.

As previously discussed, Figure 1 illustrates schematically a conventional plant for the production of carbon black and Figures 2a and 2b illustrate simplified cross sectional side views of previously known tube heat exchangers 2.

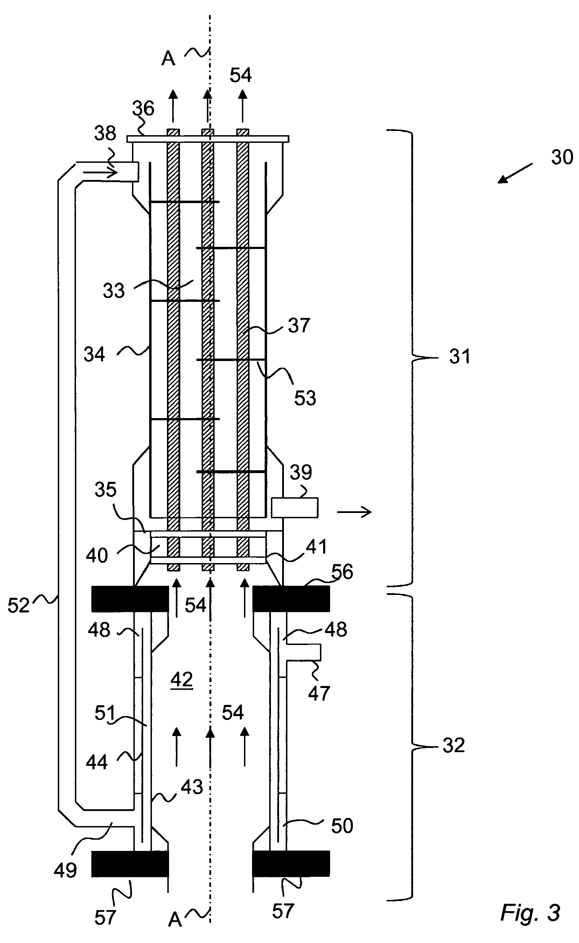

Figure 3 illustrates one example of a heat exchanger 30 in accordance with the present invention. As shown in the figure, the heat exchanger 30 comprises a first heat exchanging part 31 and a second heat exchanging part 32. The first heat exchanging part 31 comprises a substantially vertically arranged substantially cylindrical first chamber 33 enclosed by a substantially cylindrically shaped jacket 34, a lower end wall 35 and an upper end wall 36. A plurality of tubes 37 are arranged vertically and extend through the entire first chamber 33 from the lower end wall 35 to the upper end wall 36. The tubes are adapted for flow of combusted gas therein, i.e. gas which has been transferred from the combustion chamber of the carbon black plant.

The gas to be preheated is introduced into the first chamber 33 through the first inlet 38, preferably arranged at the top of the first chamber 33. The gas to be preheated is allowed to flow inside the first chamber on the outside of the tubes 37. Thus, heat from the combusted gas is transferred to the gas to be preheated as it flows through the first chamber. The preheated gas is allowed to exit from the first chamber through first outlet 39, preferably arranged at a lower portion of the first chamber 33, and thereafter transferred back to the combustion chamber, in accordance with previously known techniques, for serving as combustion gas.

The first chamber may suitably comprise a plurality of horizontally arranged plates 53 extending from the jacket 34 into the first chamber 33. Such plates 53 force the gas flowing through the chamber to take a longer part thereby increasing the time inside the chamber and thus the temperature of the exiting preheated gas.

For sake of simplicity, Figure 3 only shows three tubes 37. However, as is obvious to the skilled person, the heat exchanger comprises typically at least 20 tubes. The tubes are very long and thus generally suffer from considerable thermal expansion in the vertical direction which causes thermal stress as previously discussed with regard to the prior art. In order to overcome this problem, the first heat exchanging part may be provided with any previously known means to compensate for this. For example, compensating devices for allowing thermal expansion of the tubes may be installed. Furthermore, cooling of the bottom plate, i.e. the lower end wall, may be included, as shown in Figure 3. This is achieved by means of a bottom space 40 defined by the lower end wall 35 and a lower bottom plate 41 wherein cooling gas is allowed to flow through said bottom space 40.

The second heat exchanging part 32 of the heat exchanger 30 is preferably arranged upstream of the first heat exchanging part 31 relating to the flow of combusted gas, as illustrated by arrows 54. This means that the second heat exchanging part is arranged vertically below the first heat exchanging part.

Preferably, the second and the first heat exchanging parts are arranged such that their respective vertical central axes A coincide as shown in Figure 3. Thereby, the flow of combusted gas is not unnecessarily disturbed.

The second heat exchanging part 32 comprises a substantially vertically arranged second chamber 42 adapted for flow of combusted gas therein. The second chamber 42 is surrounded by substantially cylindrically shaped and vertically arranged first shell 43, which thus constitutes a wall of the second chamber 42. The first shell 43 is adapted for heat transfer from the combusted gas flowing inside the second chamber 42 to a gas to be preheated flowing on the outside of the first shell. The combusted gas flowing inside the chamber 42 is thus in direct contact with the first shell 43.

The gas which has flown on the outside of the first shell is thereafter flown through a conduit 52, from the second heat exchanging part 32 to the first heat exchanging part 31, to there be further heated by flow through the first chamber 33. Preferably, the conduit is adapted for flow of gas from the second heat exchanging part to the first chamber 33 via the first inlet 38.

The fact that the gas which is introduced into the first chamber 33 has been warmed in the second heat exchanging part 32 prior to its introduction into the first chamber reduces the temperature difference between the surface of the tubes 37 and the combusted gas comprising suspended carbon black flowing inside the tubes and thereby, the risk of fouling of the tubes is significantly reduced or even essentially eliminated. The heat exchanger according to the present invention can easily achieve a temperature of the gas introduced into the first chamber which is at least twice the temperature in accordance with prior art, for example as shown in Figures 2a and 2b. Furthermore, this is achieved without requiring any additional source of heat other than the combusted gas. Thus, the heat exchanger according to the present invention efficiently utilizes the heat of the combusted gas and ensures a carbon black production which has high productivity as well as is cost efficient, especially since it requires a minimum of stops for maintenance purposes.

Even though the temperature difference between the combusted gas and the surface of the first shell in most cases will be significant, fouling will not be a problem in the second heat exchanging part since it has a considerably greater diameter than the inside diameter of the tubes. Furthermore, cleaning of the second chamber is considerably easier than cleaning of the tubes 37.

According to one preferred embodiment as shown in Figure 3, the second heat exchanging part further comprises a substantially cylindrically shaped second shell 44. The second shell 44 is arranged radially outside of said first shell 43 and substantially concentrically therewith so that a substantially cylindrically shaped gap 51, adapted for flow of gas to be preheated, is formed between the first and the second shell.

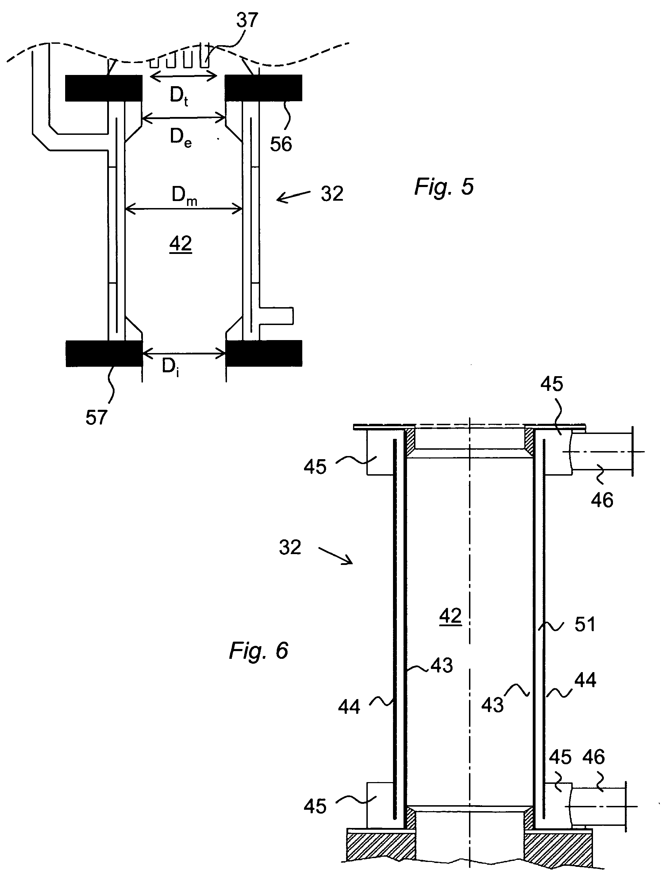

The gap 51 is substantially cylindrical, and it is preferable to provide means for ensuring that the gas flowing on the outside of the first shell is evenly distributed over the entire circumferential surface of the first shell to ensure the best possible heat transfer thereto. This can for example be achieved by providing a plurality of evenly distributed inlets arranged around the circumference of the second shell. This does however require a lot of tubing and is therefore quite space consuming. A more simple solution is to allow the gap 51 to be open at its lower end as well as at its upper end for allowing gas to flow into and out of said gap as shown for example in Figure 3. Preferably, an upper ring chamber 45 (shown in Figure 6) adapted for distributing or collecting the gas around the circumference of the gap is arranged at the upper end of the gap. Furthermore, a lower ring chamber 45 adapted for distributing or collecting the gas around the circumference of the gap is preferably arranged at the lower end of the gap.

According to one embodiment, this is achieved by the second heat exchanging part 32 comprising a ring chamber, in the form of a substantially cylindrically shaped inlet space 48, essentially arranged radially outside of said second shell 44. A second inlet 47 is associated with said inlet space 48 for introducing gas to be preheated into the gap 51 via said inlet space 48. Moreover, it is preferred that the second heat exchanging part 32 further comprises a second ring chamber, in the form of a substantially cylindrically shaped outlet space 50, essentially arranged radially outside of said second shell 44, and a second outlet 49 adapted for removing gas to be preheated from the gap 51 via said outlet space 50 to the conduit 52. In accordance with this embodiment, the gas to be preheated enters the second heat exchanging part 32 via the second inlet 47, is distributed in the inlet chamber 48 and into the gap 51, flows vertically inside the gap 51, is collected in outlet chamber 50, and thereafter leaves the second heat exchanging part 32 guided through the second outlet 49 into the conduit 52 for transfer to the first heat exchanging part 31.

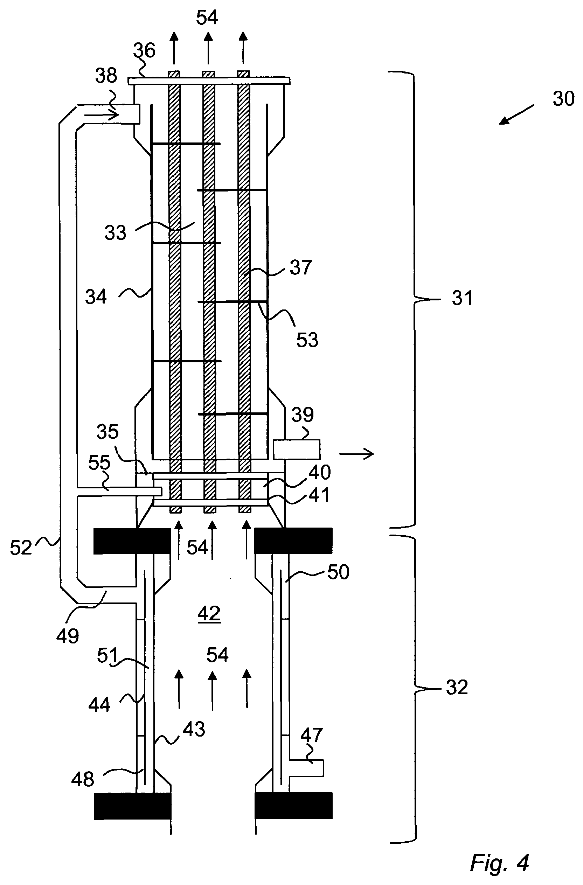

In accordance with the design of the second heat exchanging part as shown in Figure 3, the flow of gas to be preheated on the outside of the first shell is in a counter-flow of the flow of combusted gas inside the second chamber 42. It is however also possible to design the second heat exchanging part so that the flow of gas to be preheated on the outside of the first shell is parallel to the flow of combusted gas flowing inside the second chamber 42. Such a design is shown in Figure 4.

The embodiment shown in Figure 4 differs from the embodiment shown in Figure 3 in the arrangement of the second inlet and the second outlet, creating the inlet space and the outlet space. It is obvious to the skilled person that the flow of gas to be preheated inside the gap 51 will be parallel to the flow of the combusted gas.

The embodiment shown in Figure 4 further differs from the embodiment of figure 3 in that the design comprises means for cooling the lower end wall using a cooling gas, in this case a gas which may be reused as combustion gas when preheated. The cooling gas is introduced into a bottom space 40 defined by the lower end wall 35 and a lower bottom plate 41 and allowed to exit the space through a third outlet 55. From the third outlet 55, the gas is transferred to the conduit 52 wherein it is mixed with the flow of gas flowing from the second heat exchanging part. Such means for cooling of the lower end wall may naturally also be included in a design according to the embodiment shown in Figure 3.

According to an alternative embodiment, not shown, the cooling gas may be transferred directly from the third outlet to the first inlet 38 by for example a second conduit.

In order to obtain the best possible heat transfer in the second heat exchanging part, it is desirable to have as large heat exchanging surface as possible. Therefore, the diameter of the chamber should be relatively large, at least in a substantial portion along the vertical extension thereof. In accordance with one preferred embodiment, the second chamber has a largest diameter Dₘ which is bigger than the outer diameter Dt of the bundle of tubes of the first heat exchanging part. This is illustrated in Figure 5. In most cases, it is practical that the second chamber 42 has smaller diameter in the lower portion Di and/or the upper portion Dₑ thereof in order to efficiently control the flow when entering and exiting the second chamber. Thus, in accordance with one preferred embodiment, Dᵢ < Dₘ and Dₑ < Dₘ.

Moreover, in order to further improve the heat exchange in the second heat exchanging part of the heat exchanger, the first shell may suitably be provided with external fins on the outside of the first shell. The purpose of the fins is to increase the heat transferring surface of the first shell. The fins may for example be arranged essentially horizontally; however other arrangements are also plausible. Furthermore, the fins may for example be welded to the surface of the first shell.

Figure 6 illustrates a second heat exchanging part 32 according to one alternative embodiment. A first ring chamber 45 is arranged at the upper end of the gap 51 and essentially radially outside of the first and second shell members. A second ring chamber 45 is arranged at the lower end of the gap 51 and essentially radially outside of the first and second shell members. An inlet/outlet 46 for gas to be preheated is associated with each ring chamber 45. As previously discussed, the ring chambers distribute the gas around the circumference of the gap 51 and the first shell member or collects the gas from the circumference of the gap 51, depending on whether the ring chamber is associated with an inlet or an outlet for the gas to be preheated. It is obvious to the skilled person that it is also possible to arrange the second inlet and/or the second outlet directly to the gap 51 even though this is less preferred because of reduced heat transfer due to uneven distribution of the gas to be preheated around the circumference of the first shell member.

In accordance with one preferred embodiment of the heat exchanger according to the invention, the second heat exchanging part is prevented from expansion in the vertical direction due to the thermal load. This is achieved by ensuring that the second heat exchanging part is rigidly mounted between two vertically separated fixed installations 56, 57 as shown in Figure 3. Examples of such fixed installations may for example be a ground surface, a concrete fundament or the like. Naturally, the different parts of the second heat exchanging part will expand due to the thermal load and therefore it is advantageous to incorporate internal expansion means into the second heat exchanging part. Examples of suitable expansion means could for example be bellows or the like. Such are previously known to the skilled person and will therefore not be described further in the present disclosure.

The invention is not limited to the embodiments shown and discussed with reference to the accompanying drawings, but may be varied within the scope of the appended claims. It should be noted that each illustrated feature can be combined with all other illustrated features within the framework to be able to achieve the desired technical function.

The design of the first heat exchanging part is not particularly limiting to the invention as long as it comprises a first chamber and the tubes. It may for example comprise any previously known means for allowing the tubes to expand or to cool the bottom plate. Moreover, the tubes in the first chamber may be provided with fins in the same manner as proposed in WO 2010/033070, hereby incorporated by reference. In fact, the design of the first heat exchanging part may be in accordance with any previously known tube heat exchanger within the technical field of carbon black.

## Claims

1. A heat exchanger (30) for an apparatus for the production of carbon black, comprising a first heat exchanging part (31) comprising a substantially vertically arranged substantially cylindrical first chamber (33) enclosed by a substantially cylindrically shaped jacket (34), a lower end wall (35) and an upper end wall (36), vertically arranged tubes (37) adapted for flow of combusted gas therein and which extend through the entire first chamber (33) from the lower end wall (35) to the upper end wall (36), a first inlet (38) and a first outlet (39) for gas to be preheated to flow inside the first chamber (33) on the outside of the tubes (37) **characterized in that** the heat exchanger further comprises a second heat exchanging part (32), the second heat exchanging part comprising a substantially vertically arranged second chamber (42) adapted for flow of combusted gas therein, the second chamber (42) being surrounded by a substantially cylindrically shaped first shell (43) adapted for allowing heat transfer to a gas to be preheated flowing on the outside of said first shell (43), and wherein the heat exchanger further comprises a conduit (52) adapted for flow of said gas to be preheated from the second heat exchanging part (32) to the first heat exchanging part (31).

2. A heat exchanger according to claim 1 wherein the second heat exchanging part (32) is arranged upstream of the first heat exchanging part (31) relating to the flow (54) of combusted gas.

3. A heat exchanger in accordance with any of claim 1 and 2 wherein the second heat exchanging part (32) has a vertical central axis (A) which coincides with a vertical central axis of the first heat exchanging part (31).

4. A heat exchanger according to any of the preceding claims wherein the second heat exchanging part (32) further comprises a substantially cylindrically shaped second shell (44) arranged radially outside of said first shell (41) and substantially concentrically with the first shell (41) so that a substantially cylindrically shaped gap (51), adapted for flow of gas to be preheated, is formed between the first and the second shell.

5. A heat exchanger according to claim 4 wherein said gap (51) is open at both vertical ends thereof.

6. A heat exchanger according to any of claims 4 or 5 wherein the second heat exchanging part (32) further comprises a substantially cylindrically shaped ring chamber (45) arranged at one of the vertical ends of said gap (51) and adapted for distributing the gas to be preheated into the gap (51) around the circumference of the first shell member (43), and a second inlet (47) for introducing gas to be preheated into said gap (51) via said ring chamber.

7. A heat exchanger according to any of claims 4 to 6 wherein the second heat exchanging part (32) further comprises a substantially cylindrically shaped ring chamber (45) arranged at one of the vertical ends of said gap (51) and adapted for collecting the gas to be preheated from the gap (51), and a second outlet (49) removing gas to be preheated from said gap (51) via said ring chamber to said conduit (52).

8. A heat exchanger according to any of the preceding claims wherein the tubes (37) are arranged in a bundle having a diameter (Dₜ) which is smaller than a largest diameter of the second chamber (Dₘ).

9. A heat exchanger according to any of the preceding claims wherein the conduit (52) is adapted for flow of gas from the second heat exchanging part (32) to the chamber (33) of the first heat exchanging part via said first inlet (38).

10. A heat exchanger according to any of the preceding claims wherein said second heat exchanging part (32) is rigidly mounted so as to avoid thermal expansion thereof in the vertical direction.

11. A heat exchanger according to any of the preceding claims, wherein the second heat exchanging part (32) comprises internal expansion means for allowing different parts thereof to expand thermally.

12. A heat exchanger according to any of the preceding claims wherein said first shell (43) is provided with fins on at least a part of the outer side thereof.

13. A heat exchanger according to any of the preceding claims comprising means for cooling said lower end wall (35) by a cooling gas, said cooling gas being introduced into a bottom space (40) of the first heat exchanging part, said bottom space (40) defined by said lower end wall (35) and a lower bottom plate (41).

14. A heat exchanger according to claim 13 wherein means are provided for flow of said cooling gas from said bottom space to said conduit and/or first inlet (38) for gas to be preheated in the first chamber (33).

15. A heat exchanger according to any of the preceding claims wherein the second heat exchanging part (32) is designed so that a flow of gas to be preheated, on the outside of said first shell (43), is in a counter-flow of the flow of combusted gas (54) flowing inside the second chamber (42).

16. A heat exchanger according to any of claims 1 to 14 wherein the second heat exchanging part (32) is designed so that a flow of gas to be preheated, on the outside of said first shell (43), is parallel to the flow of combusted gas (54) flowing inside the second chamber (42).

17. A carbon black production plant comprising a combustion chamber and a heat exchanger (30) in accordance with any of the preceding claims.

## Patentansprüche

1. Wärmetauscher (30) für ein Gerät zur Herstellung von Ruß, umfassend einen ersten Wärmetauscherteil (31), der eine im Wesentlichen vertikal angeordnete, im Wesentlichen zylindrische erste Kammer (33), die von einem im Wesentlichen zylinderförmigen Mantel (34) umgeben ist, eine untere Endwand (35) und eine obere Endwand (36), vertikal angeordnete Rohre (37), die für eine Strömung von verbranntem Gas darin ausgelegt sind und die sich durch die gesamte erste Kammer (33) von der unteren Endwand (35) zur oberen Endwand (36) erstrecken, einen ersten Einlass (38) und einen ersten Auslass (39) für vorzuheizendes Gas, das in der ersten Kammer (33) auf der Außenseite der Rohre (37) strömt, umfasst, **dadurch gekennzeichnet, dass** der Wärmetauscher ferner einen zweiten Wärmetauscherteil (32) umfasst, wobei der zweite Wärmetauscherteil eine im Wesentlichen vertikal angeordnete zweite Kammer (42) umfasst, die für eine Strömung von verbranntem Gas darin ausgelegt ist, wobei die zweite Kammer (42) von einem im Wesentlichen zylinderförmigen Mantel (43) umgeben ist, der ausgelegt ist, Wärmeaustausch zu einem vorzuheizendem Gas, das auf der Außenseite des ersten Gehäuses (43) strömt, zu gestatten, und wobei der Wärmetauscher ferner eine Leitung (52) umfasst, die für eine Strömung des vorzuheizenden Gases von dem zweiten Wärmetauscherteil (32) zu dem ersten Wärmetauscherteil (31) ausgelegt ist.

2. Wärmetauscher nach Anspruch 1, wobei der zweite Wärmetauscherteil (32) stromaufwärts von dem ersten Wärmetauscherteil (31) bezüglich der Strömung (54) von verbranntem Gas angeordnet ist.

3. Wärmetauscher nach einem der Ansprüche 1 und 2, wobei der zweite Wärmetauscherteil (32) eine vertikale Mittelachse (A) aufweist, die mit einer vertikalen Mittelachse des ersten Wärmetauscherteils (31) übereinstimmt.

4. Wärmetauscher nach einem der vorhergehenden Ansprüche, wobei der zweite Wärmetauscherteil (32) ferner ein im Wesentlichen zylinderförmiges zweites Gehäuse (44) umfasst, das radial außerhalb des ersten Gehäuses (41) angeordnet ist und im Wesentlichen mit dem ersten Gehäuse (41) konzentrisch ist, so dass ein im Wesentlichen zylinderförmiger Spalt (51), der für eine Strömung von vorzuheizendem Gas ausgelegt ist, zwischen dem ersten Gehäuse und dem zweiten Gehäuse gebildet wird.

5. Wärmetauscher nach Anspruch 4, wobei der Spalt (51) an beiden vertikalen Enden davon offen ist.

6. Wärmetauscher nach einem der Ansprüche 4 oder 5, wobei der zweite Wärmetauscherteil (32) ferner eine im Wesentlichen zylinderförmige Ringkammer (45) umfasst, die an einem der vertikalen Enden des Spalts (51) angeordnet ist und zur Verteilung von vorzuheizendem Gas in den Spalt (51) um den Umfang des ersten Gehäuseelements (43) ausgelegt ist, und einen zweiten Einlass (47) zur Einführung von vorzuheizendem Gas in den Spalt (51) über die Ringkammer.

7. Wärmetauscher nach einem der Ansprüche 4 bis 6, wobei der zweite Wärmetauscherteil (32) ferner eine im Wesentlichen zylinderförmige Ringkammer (45) umfasst, die an einem der vertikalen Enden des Spalts (51) angeordnet ist und zum Auffangen des vorzuwärmenden Gases von dem Spalt (51) ausgelegt ist, und einen zweiten Auslass (49) zum Entfernen von vorzuheizendem Gas aus dem Spalt (51) über die Ringkammer zur Leitung (52).

8. Wärmetauscher nach einem der vorhergehenden Ansprüche, wobei die Rohre (37) in einem Bündel mit einem Durchmesser (Dₜ), der kleiner als ein größter Durchmesser der zweiten Kammer (Dₘ) ist, angeordnet sind.

9. Wärmetauscher nach einem der vorhergehenden Ansprüche, wobei die Leitung (52) für Gasströmung von dem zweiten Wärmetauscherteil (32) zur Kammer (33) des ersten Wärmetauscherteils über den ersten Einlass (38) ausgelegt ist.

10. Wärmetauscher nach einem der vorhergehenden Ansprüche, wobei der zweite Wärmetauscherteil (32) starr angebracht ist, um seine Wärmeausdehnung in vertikaler Richtung zu vermeiden.

11. Wärmetauscher nach einem der vorhergehenden Ansprüche, wobei der zweite Wärmetauscherteil (32) interne Expansionsmittel umfasst, um Wärmeausdehnung von verschiedenen Teilen davon zu gestatten.

12. Wärmetauscher nach einem der vorhergehenden Ansprüche, wobei das erste Gehäuse (43) mit Finnen zumindest auf einem Teil seiner Außenseite ausgestattet ist.

13. Wärmetauscher nach einem der vorhergehenden Ansprüche, umfassend Mittel zum Kühlen der unteren Endwand (35) mit Kühlgas, wobei das Kühlgas in einen Bodenraum (40) des ersten Wärmetauscherteils eingeführt wird, wobei der Bodenraum (40) von der unteren Endwand (35) und einer unteren Bodenplatte (41) definiert wird.

14. Wärmetauscher nach Anspruch 13, wobei Mittel für eine Strömung des Kühlgases von dem Bodenraum zur Leitung und/oder dem ersten Einlass (38) für vorzuwärmendes Gas in der ersten Kammer (33) bereitgestellt sind.

15. Wärmetauscher nach einem der vorhergehenden Ansprüche, wobei der zweite Wärmetauscherteil (32) so gestaltet ist, dass eine Strömung von vorzuheizendem Gas auf der Außenseite des ersten Gehäuses (43) in Gegenströmung zur Strömung von verbranntem Gas (54) ist, das in der zweiten Kammer (42) strömt.

16. Wärmetauscher nach einem der Ansprüche 1 bis 14, wobei der zweite Wärmetauscherteil (32) so gestaltet ist, dass eine Strömung von vorzuheizendem Gas auf der Außenseite des ersten Gehäuses (43) parallel zur Strömung von verbranntem Gas (54) ist, das in der zweiten Kammer (42) strömt.

17. Rußherstellungsanlage, umfassend eine Verbrennungskammer und einen Wärmetauscher (30) nach einem der vorhergehenden Ansprüche.

## Revendications

1. Échangeur de chaleur (30) pour un appareil destiné à la production de noir de carbone, comprenant une première partie d'échange de chaleur (31) comprenant une première chambre essentiellement cylindrique disposée essentiellement verticalement (33) enfermée par une chemise formée de manière essentiellement cylindrique (34), une paroi extrême inférieure (35) et une paroi extrême supérieure (36), des tubes disposés verticalement (37) adaptés pour l'écoulement de gaz brûlé à l'intérieur de ceux-ci et qui s'étendent à travers la première chambre toute entière (33) depuis la paroi extrême inférieure (35) jusqu'à la paroi extrême supérieure (36), une première entrée (38) et une première sortie (39) pour que le gaz à préchauffer s'écoule à l'intérieur de la première chambre (33) sur l'extérieur des tubes (37), **caractérisé en ce que** cet échangeur de chaleur comprend en outre une deuxième partie d'échange de chaleur (32), cette deuxième partie d'échange de chaleur comprenant une deuxième chambre disposée essentiellement verticalement (42) adaptée pour l'écoulement de gaz brûlé à l'intérieur de celle-ci, cette deuxième chambre (42) étant entourée par une première calandre de forme essentiellement cylindrique (43) adaptée de façon à permettre un transfert de chaleur vers un gaz à préchauffer s'écoulant sur l'extérieur de ladite première calandre (43), et cet échangeur de chaleur comprenant en outre un conduit (52) adaptée pour l'écoulement dudit gaz à préchauffer de la deuxième partie d'échange de chaleur (32) à la première partie d'échange de chaleur (31).

2. Échangeur de chaleur selon la revendication 1, dans lequel la deuxième partie d'échange de chaleur (32) est disposée en amont de la première partie d'échange de chaleur (31) par rapport à l'écoulement (54) de gaz brûlé.

3. Échangeur de chaleur selon l'une quelconque des revendications 1 et 2, dans lequel la deuxième partie d'échange de chaleur (32) a un axe central vertical (A) qui coïncide avec un axe central vertical de la première partie d'échange de chaleur (31).

4. Échangeur de chaleur selon l'une quelconque des revendications précédentes, dans lequel la deuxième partie d'échange de chaleur (32) comprend en outre une deuxième calandre de forme essentiellement cylindrique (44) disposée radialement à l'extérieur de ladite première calandre (41) et de manière essentiellement concentrique avec la première calandre (41) de manière à ce qu'un espace de forme essentiellement cylindrique (51), adapté pour l'écoulement de gaz à préchauffer, soit formé entre la première et la deuxième calandre.

5. Échangeur de chaleur selon la revendication 4, dans lequel ledit espace (51) est ouvert aux deux extrémités verticales de celui-ci.

6. Échangeur de chaleur selon l'une quelconque des revendications 4 ou 5, dans lequel la deuxième partie d'échange de chaleur (32) comprend en outre une chambre annulaire de forme essentiellement cylindrique (45) disposée à une des extrémités verticales dudit espace (51) et adaptée de façon à distribuer le gaz à préchauffer dans l'espace (51) autour de la circonférence du premier élément calandre (43), et une deuxième entrée (47) pour introduire le gaz à préchauffer dans ledit espace (51) par l'intermédiaire de ladite chambre annulaire.

7. Échangeur de chaleur selon l'une quelconque des revendications 4 à 6, dans lequel la deuxième partie d'échange de chaleur (32) comprend en outre une chambre annulaire de forme essentiellement cylindrique (45) disposée à une des extrémités verticales dudit espace (51) et adaptée de façon à recueillir le gaz à préchauffer de l'espace (51), et une deuxième sortie (49) enlevant le gaz à préchauffer dudit espace (51) par l'intermédiaire de ladite chambre annulaire jusqu'audit conduit (52).

8. Échangeur de chaleur selon l'une quelconque des revendications précédentes, dans lequel les tubes (37) sont disposés en un faisceau ayant un diamètre (Dₜ) qui est plus petit que le plus grand diamètre de la deuxième chambre (Dₘ).

9. Échangeur de chaleur selon l'une quelconque des revendications précédentes, dans lequel le conduit (52) est adapté pour l'écoulement de gaz de la deuxième partie d'échange de chaleur (32) à la chambre (33) de la première partie d'échange de chaleur par l'intermédiaire de ladite première entrée (38).

10. Échangeur de chaleur selon l'une quelconque des revendications précédentes, dans lequel ladite deuxième partie d'échange de chaleur (32) est montée rigidement de façon à éviter une dilatation thermique de celle-ci dans la direction verticale.

11. Échangeur de chaleur selon l'une quelconque des revendications précédentes, dans lequel la deuxième partie d'échange de chaleur (32) comprend un moyen de dilatation interne pour permettre à différentes parties de celle-ci de se dilater thermiquement.

12. Échangeur de chaleur selon l'une quelconque des revendications précédentes, dans lequel ladite première calandre (43) est pourvue d'ailettes sur au moins une parte du côté extérieur de celle-ci.

13. Échangeur de chaleur selon l'une quelconque des revendications précédentes, comprenant un moyen pour refroidir ladite paroi extrême inférieure (35) avec un gaz de refroidissement, ledit gaz de refroidissement étant introduit dans un espace au fond (40) de la première partie d'échange de chaleur, ledit espace au fond (40) étant défini par ladite paroi extrême inférieure (35) et une plaque de fond inférieure (41).

14. Échangeur de chaleur selon la revendication 13, dans lequel un moyen est prévu pour l'écoulement dudit gaz de refroidissement dudit espace au fond audit conduit et/ou à ladite première entrée (38) pour le gaz à préchauffer dans la première chambre (33).

15. Échangeur de chaleur selon l'une quelconque des revendications précédentes, dans lequel la deuxième partie d'échange de chaleur (32) est conçue de manière à ce qu'un écoulement de gaz à préchauffer, sur l'extérieur de ladite première calandre (43), soit à contre-courant avec l'écoulement de gaz brûlé (54) s'écoulant à l'intérieur de la deuxième chambre (42).

16. Échangeur de chaleur selon l'une quelconque des revendications 1 à 14, dans lequel la deuxième partie d'échange de chaleur (32) est conçue de manière à ce qu'un écoulement de gaz à préchauffer, sur l'extérieur de ladite première calandre (43), soit parallèle à l'écoulement de gaz brûlé (54) s'écoulant à l'intérieur de la deuxième chambre (42).

17. Installation de production de noir de carbone comprenant une chambre de combustion et un échangeur de chaleur (30) selon l'une quelconque des revendications précédentes.
